# EUROPEAN PATENT APPLICATION

(11) **EP 4 534 313 A1**
(43) Date of publication of application: **09.04.2025**
(21) Application number: 24203490.8
(22) Date of filing: 30.09.2024
(51) Int. Cl.: B60K 7/00, B60K 17/04

(54) **IMPROVED ELECTRIC TRACTION WHEEL HUB**

(30) Priority: 02.10.2023 IT 202300020271
(71) Applicant: IVECO S.P.A., 10156 Torino (IT)
(72) Inventor: PEREIRA DE LEMOS, Josè Francivaldo, 10156 TORINO (IT)
(74) Representative: Studio Torta S.p.A.

(57) **Abstract**

Wheel hub (10) for an axle (1) of a heavy vehicle, comprising a fixed portion (8) configured to be rigidly carried by one end (3, 4) of the axle (1) and a mobile portion (9) configured to be carried by the latter so as to freely rotate relative to the fixed portion (8), said fixed portion (8) and said mobile portion (9) delimiting, with the end (3, 4), a space (14) isolated from the external environment, the wheel hub (10) comprising an electric machine (15) housed in the space (14) and comprising a stator (15') carried integrally to the fixed portion (8) and a rotor (15") operatively connected to the mobile portion (9), the wheel hub (10) comprising an epicyclic gearing transmission (16) housed in the space (14) radially on the inside relative to the rotor (15'') and connecting the rotor (15'') to the mobile portion (19) so as to vary the speed/torque between the rotor (15'') and the mobile portion (9).

## Description

### CROSS-REFERENCE TO RELATED APPLICATIONS

This patent application claims priority from Italian patent application no. 102023000020271 filed on October 2, 2023, the entire disclosure of which is incorporated herein by reference.

### TECHNICAL FIELD

The invention relates to a wheel hub for an axle of a vehicle, in particular an integrated electric traction wheel hub for an axle of a heavy vehicle.

### KNOWN STATE OF THE ART

Heavy vehicles, such as road transport vehicles, for example trucks, tend to be increasingly electrified in order to reduce their polluting emissions. In particular, such vehicles can be hybrid vehicles or purely electric vehicles.

In particular, electric vehicles comprise at least one electric axle, i.e. an axle equipped with electric machines such as motors/generators configured to deliver a torque to the wheel hubs so as to allow them to move or to recharge the battery modules of the vehicle when the latter is braking.

However, there is always a need to improve existing electric axles in order to reduce the dimensions due to the presence of electric machines that affect the usable spaces of the vehicle as well as forcing changes to the suspension systems.

A similar need also applies to rims, which need to be optimally mounted on electric axles without compromising their structural characteristics.

The object of the invention is to fulfil the aforementioned needs in an optimized and economic fashion.

### SUMMARY OF THE INVENTION

The aforesaid object is reached by an integrated electric traction wheel hub, an axle and a vehicle as claimed in the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a schematic longitudinal section view of an integrated electric traction wheel hub according to the invention showing first functional elements;
- Figure 2 is a schematic longitudinal section view of an integrated electric traction wheel hub according to the invention showing second functional elements and torque lines transmitted during the operation of the wheel hub according to the invention;

- Figure 3 is a partially exploded perspective view of the wheel hub of figures 1 and 2;

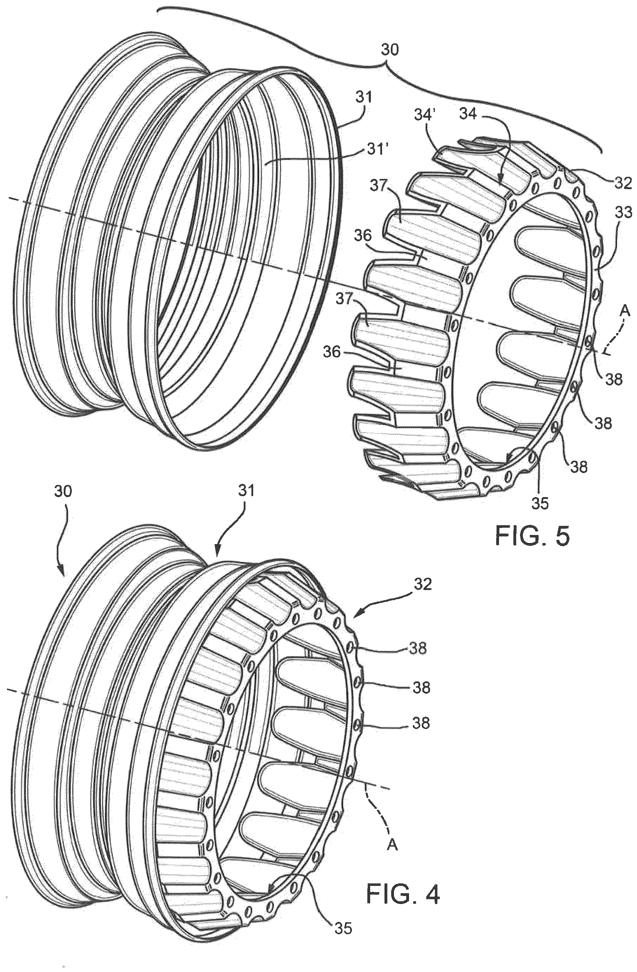

- Figure 4 is a perspective view of a rim for an integrated electric traction wheel hub according to the invention;
- Figure 5 is an exploded perspective view of the rim of figure 4;

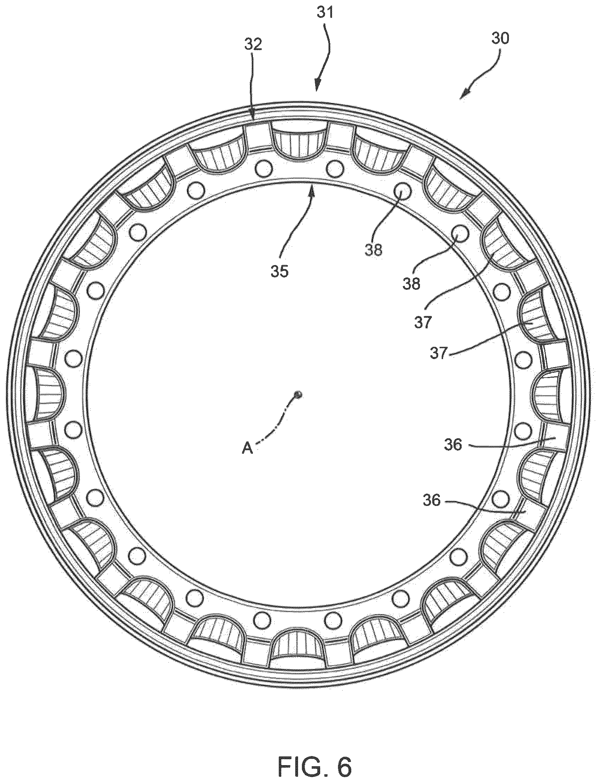

- Figure 6 is a front view of the rim of figure 4; and
- Figure 7 is a perspective view of an axle for an integrated electric traction wheel hub according to the invention.

### DETAILED DESCRIPTION OF THE INVENTION

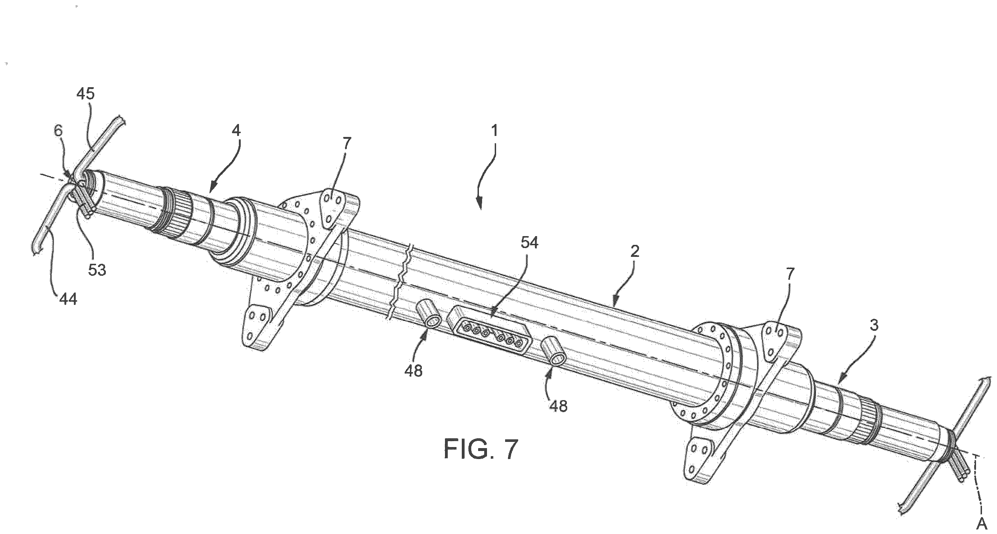

In figure 7, number 1 indicates, as a whole, an axle of a vehicle, preferably a heavy vehicle, for example a truck that is not shown herein, basically comprising a central portion 2 and a pair of end portions 3, 4 connected to the central portion 2 on opposite sides, in a preferably rigid manner, along a longitudinal axis A thereof.

The central portion 2 is advantageously hollow so as to define a space 5 designed to house functional elements of the vehicle as described below. Preferably, the end portions 3, 4 are also hollow so as to define a continuous space 5 along the entire extension of the axle 1 along the axis A.

The end portions 3, 4 are provided with openings 6 configured to allow access to the space 5 as described below.

Preferably, the axle 1 comprises at least one flange 7 located close to each one of the end portions 3, 4 and rigidly carried by them or, like in the case shown herein, by the central portion 2 and configured to support operating elements of the vehicle, such as for example mechanical brakes or sensor means.

The axle 1 comprises a pair of wheel hubs 10 comprising a fixed portion 8 rigidly carried by the respective end portion 3, 4 and a mobile portion 9 carried by the respective end portion 3, 4 so as to freely rotate.

As to the wheel hubs 10, for the sake of simplicity reference will be made to only one of them, for example the left one, and the items of information given below also apply - in the same way - to the right wheel hub, the structure described below obviously being mirror-like relative to a longitudinal plane of the vehicle.

The fixed portion 8 advantageously is cup-shaped and comprises a radial wall 8' connected to the end of the end portion 4 and extending perpendicular to the longitudinal axis A and a cylindrical wall 8" extending from the radial wall 8' towards the vehicle, i.e. towards the intermediate portion 2 of the axle 1.

The radial wall 8' is advantageously connected to the end of the end portion 4 by means of a rigid connection, such as an interference shape connection. Preferably, the radial wall 8' is manufactured as one single piece together with the cylindrical wall 8".

The cylindrical wall 8" is supported, on the side opposite the radial wall 8' relative to the mobile portion 9, by means of support means 11, such as rolling bearings, so as to freely rotate. In the embodiment described herein, the cylindrical wall 8" cooperates with the support means 11 by means of a support element 12 rigidly connected to the cylindrical wall 8" and extending radially towards the aforementioned support means 11.

Preferably, the cylindrical wall 8" cooperates as described above with the mobile portion 9 in a sealed manner by means of sealing means 13, such as rotating sealing rings, so as to delimit a space 14 isolated from the external environment, which is radially delimited around the axis A by the cylindrical wall 8" and is axially delimited by the radial wall 8' and by the mobile portion 9.

The wheel hub 10 comprises, housed in the space 14, an electric machine 15 provided with a stator 15' and with a rotor 15" operatively operated by the stator 15'' and a transmission 16 operatively connecting the rotor 15" to the mobile portion 9 so as to vary its speed/transmitted torque with relative to that originally provided to the rotor 15".

In particular, the stator 15' is rigidly carried by the fixed portion 8, in particular by the cylindrical wall 8" and, therefore, extends along the axis A inside the space 14.

The transmission 16 is advantageously sized so as to be radially housed inside the rotor 15" and, particularly, so as to also be axially comprised by the rotor 15".

More in detail, the rotor 15" is connected to a rotor support 17 carried so as to freely rotate relative to the fixed portion 8, in particular relative to the radial wall 8', i.e. to a flanged portion extending relative thereto.

The rotor support 17 extends radially inside the rotor 15 and substantially has the shape of an annular disc housed around the end portion 4. The rotor support 17 is operatively connected to the mobile portion 9 by means of the transmission 16.

In detail, the transmission 16 comprises a gearing, advantageously a planetary/epicyclic gearing. More in detail, the gearing is a compound planetary gearing, also called multi-stage gearing, i.e. comprising several gears operatively connected to one another.

Consequently, the transmission 16 comprises a first epicyclic gearing 16' operatively connected to the rotor 15'' and a second epicyclic gearing 16" operatively connected to the mobile portion 9 and operatively connected in series to said first epicyclic gearing 16'.

Both the first and second epicyclic gearing 16', 16" comprise a sun gear 18', 18", a plurality of satellites 19', 19'' carried by respective pins 20', 20'' and a crown 21', 21".

More in detail, the first sun gear 18' of the first epicyclic gearing 16' is rigidly connected to the rotor holder 17 and meshes with the first plurality of satellites 19'. There can be several numbers of first satellites 19' and they are supported so as to freely rotate relative to an axis plane perpendicular to the axis A by means of respective pins 24. By mere way of example, there are four first satellites 19' supported by respective pins 20' arranged in a cross shape relative to one another.

The pin 20' of the first satellites 19' advantageously is rigidly connected to the second sun gear 18" of the second epicyclic gearing 16" meshing with a respective plurality of second satellites 19", advantageously in a similar number and arranged similarly to the first plurality of satellites 19', but having a different number of teeth and/or a different primitive diameter so as to define a different gear ratio relative to them.

The second satellites 19" are carried by a respective pin 20"; said pins 20" are carried by a common train holder 23, connected to the mobile portion as described below.

The first and second plurality of satellites 19', 19" mesh with the respective crown 21', 21", which, in the embodiment shown herein, is commonly and rigidly carried by the end portion 4. The mobile portion 9, as mentioned above, is supported by means of support means 12, such as rolling bearings, so as to freely rotate on the end 4. In the embodiment described herein, it comprises a main mobile portion 9' and an auxiliary mobile portion 9" rigidly connected to one another.

Advantageously, the main mobile portion 9' basically comprises a main portion 9a, preferably an annular disc, cooperating with the aforementioned support means 12 and a first flanged portion 9b axially projecting along the axis A relative to the main portion 9a and rigidly connected to the train holder 23. Consequently, the first flanged portion 9b extends radially inside the rotor 15".

Advantageously, the main mobile portion 9' comprises a second flanged portion 9c radially extending from the main portion 9a and rigidly connected to a rim 30 as described below in detail.

The auxiliary mobile portion 9'' extends on the opposite side opposite the fixed portion 8 and is configured to provide support to operating elements of the vehicle, such as sensors or other elements that need to be integral to the mobile portion 9.

The wheel hub 10 also comprises a conditioning system 40 configured to cool the fixed portion 8, i.e. the stator 15' connected thereto. Advantageously, the conditioning system 40 is a fluid conditioning system.

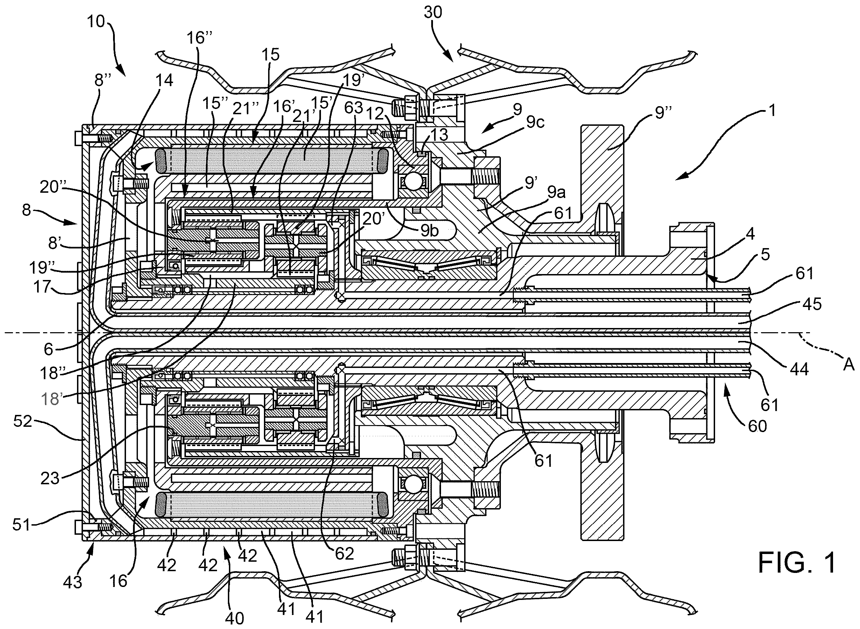

As shown in figures 1 to 3, the conditioning system 40 comprises a plurality of ducts 41, in which a conditioning fluid flows and which are adjacent to the stator 15' . Advantageously, these ducts 41 are integrated in the fixed portion 8, i.e. in the cylindrical portion 8".

Advantageously, said ducts 41 are manufactured as radially defined grooves 42 recessed with respect to the surface opposite the space 14 of the cylindrical portion 8" and isolated from the external environment by means of a cover 43 rigidly carried on the cylindrical portion, in a sealed manner, so as to delimit said ducts 41.

The ducts 41 are fluidly connected to a delivery duct 44 and to a return duct 45 configured to supply the conditioning fluid at a low temperature and to collect the conditioning fluid at a high temperature once it has flown through the ducts 41 to cool the fixed portion 8.

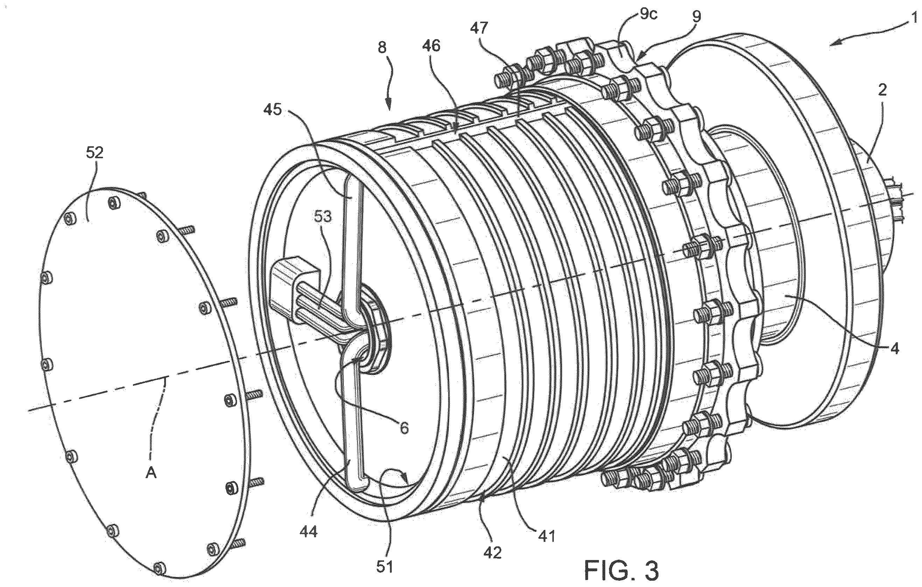

As better shown in figure 3, the ducts 41 are substantially circumferential around the axis A and advantageously have a quadrangular cross section. In particular, they have the same size and are equally spaced apart from one another.

Advantageously, the ducts 41 are fluidly connected to the delivery duct 44 and to the return duct 45 by means of respective manifolds 46 advantageously integrated in the fixed portion 8, i.e. in the cylindrical portion 8".

Advantageously, said manifolds 46 are manufactured as one single radially defined groove 47 recessed with respect to the surface opposite the space 14 of the cylindrical portion 8" and isolated from the external environment by means of the same cover 43 delimiting the ducts 41.

In detail, the groove 47 extends along the axis A over the entire length of the cylindrical portion 8", in which the ducts 41 are obtained, so as to be able to fluidly communicate with each one of them.

The delivery and return ducts 44, 45 are fluidly connected to a heat exchanger system (not shown) of the vehicle, such as for example a passive exchanger, such as an air radiator, or an active device, such as a refrigerating conditioning circuit.

Advantageously, the delivery ducts 44, 45 are housed inside the space 5 and extend between respective fluid connectors 48, as shown in figure 7, configured to allow for the connection to further pipes (not shown) connecting to the aforementioned heat exchanger of the vehicle. Preferably, the fluid connectors 48 are obtained in the central portion 2 of the axle 1.

On the opposite side, the delivery ducts 44, 45 exit from the space 5 through the opening 6 and are oriented so as to be connected to the manifolds 46 within a space 51 delimited between the fixed portion 8 and a head element 52 connected thereto.

Hence, said space 51 is radially delimited by the fixed portion 8, in particular by a flange extending between the cylindrical portion 8" and the radial portion 8' on the side opposite the cylindrical portion 8", and is axially delimited by the head element 52 and by the radial portion 8'.

In particular, the head element 52, in the embodiment shown herein, is rigidly connected to the cover 43. Clearly, it could be manufactured as one single piece together with it in an alternative embodiment.

The wheel hub 10 also comprises cables 53 for the electrical connection of the electric machine 15 to electrical energy storage means (not shown), such as a battery, of the vehicle.

The cables 53 are advantageously housed inside the space 5 and extend between respective electrical connectors 54, as shown in figure 7, configured to allow for the connection to further cables (not shown) connecting to the aforementioned electrical energy storage device. Preferably, the electrical connectors 54 are obtained in the central portion 2 of the axle 1.

On the other hand, the cables 53 exit from the space 5 through the opening 6 in the aforementioned space 51 and go through a dedicated opening, in a seals manner, in the space 14, towards the stator 15' of the electric machine 15.

Advantageously, the wheel hub 10 also comprises a lubrication system 60 configured to provide oil in the space 14, in particular in the portion housing the transmission 16.

In detail, the lubrication system 60 comprises at least one pipe 61 configured to supply lubricating fluid to a duct 62 configured to define a lubrication nozzle 63.

Advantageously, the duct 62 is integrated in the end portion 4 and the lubrication nozzle 63 is arranged so as to supply oil between the first satellites 19' and the first crown 22''.

Back to the rim 30, it comprises a rim 31 configured to cooperate with a tyre of the vehicle and a disc 32 rigidly connected to one another, for example through welding, as is is known.

In particular, the disc 32 is shaped so as to allow the wheel hub 10 to be housed inside it.

More in detail, the disc 32 comprises a coupling portion 33, advantageously comprising an annular disc and a structural portion 34 configured to provide adequate rigidity to the rim 30 and to allow for the connection to the rim 31.

In detail, the structural portion 34 is rigidly connected to a connection portion 34' thereof opposite the one connected to the coupling portion 33 to the rim 31, i.e. to a radial inner surface 31' thereof.

Advantageously, the structural portion 34 is inclined along the axis A and has the shape of a substantially truncated-cone-like annular disc so as to have a larger opening diameter in the area of the rim 31 and a smaller opening diameter 35 in the area of the coupling portion 33.

Preferably, the structural portion 34 has a corrugated development, preferably obtained circumferentially to the axis A. More in detail, said corrugated profile comprises a plurality of grooves 36 made parallel to the axis A, alternated with one another by a plurality of projections 37.

The grooves 36 preferably have a substantially curved, advantageously concave cross section facing the rim 31. More in detail, the projections 37 define a substantially flat surface with a constant cross section between the connection portion 34' and the coupling portion 33.

Advantageously, both the grooves 36 and the projections 37 each have the same shape among them. In this way, preferably, they are angularly evenly spaced apart from one another around the axis A.

The coupling portion 33 is substantially flat and defines a plurality of openings 38, advantageously circumferentially evenly spaced apart from one another relative to the axis A so as to enable the fixing, for example - as shown herein - by means of threaded means, to the flange 9c of the mobile portion 9.

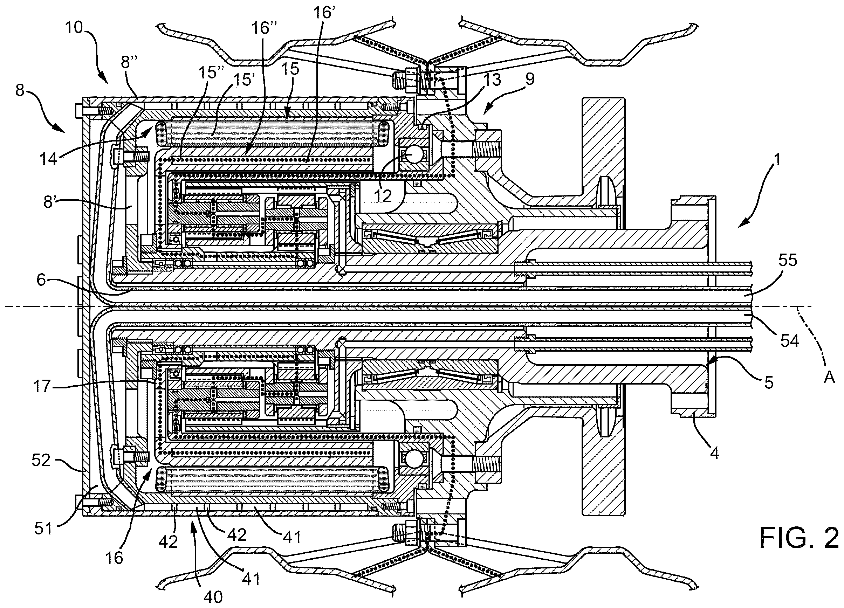

The operation of the embodiment of the wheel hub, axle and vehicle according to the invention disclosed above is the following, with reference to the torque lines of figure 2.

In a first traction operating condition, the stator 15', powered by the electrical cables 53, uses the electrical energy supplied to it to electromagnetically cooperate with the rotor 15", thus causing it to rotate; the latter rotates integrally to the rotor holder 17, which, in turn, causes the rotation of the first sun gear 18', which meshes with the first satellites 19', which mesh with the first crown 21', dragging the respective pins 20'. The pins 20', for they are rigidly connected to the second sun gear 18", cause it to rotate, thus meshing with the second satellites 19", which mesh with the second crown 21', dragging the respective pins 20". The motion thereof is collected by the common train holder 23, which, therefore, causes the rotation of the mobile portion 9, to which it is connected and which is directly connected to the rim 30, which is then caused to rotate, hence moving the vehicle.

In a second regenerative operating condition, the rim 30 causes the rotation of the mobile portion 9, which causes the rotation of the common train holder 23, which causes the rotation, with a reverse motion relative to the one described in the first operating condition, of the elements of the first and of second epicyclic gearing 16', 16", thus causing the rotation of the rotor holder 17. Hence, the latter causes the rotation of the rotor 15", which, by electromagnetically interacting with the stator 15', generates electrical energy that will be stored through the electrical cables 53 in the energy storage means of the vehicle.

Owing to the above, the advantages of a wheel hub, axle and vehicle according to the invention are evident.

Thanks to the structure disclosed herein, it is possible to provide an integrated electric traction axle thanks to the integrated electric traction hub with small dimensions and weights.

In particular, the housing of the electric machine in the wheel hub and of the epicyclic transmission inside the free space of the rotor makes it possible to obtain a very compact and light traction system, which is isolated from the external environment and, therefore, is protected from wear and dirt.

In addition, the use of a double-stage compound epicyclic gearing leads to a high gear ratio with an extremely small space take up, both axially and radially.

Furthermore, the integration of the passage of the cooling, lubrication and power supply systems inside the axle and the passage of the head space allow for an easy and optimised assembly, reducing the manufacturing times of the axle.

Moreover, the axle and the wheel hub disclosed herein are modular and scalable according to different vehicle types and sizes.

Furthermore, the use of a rim of the type disclosed herein allows the hub to be easily housed internally, though without compromising the structural properties thereof.

Indeed, the particular inclination of the disc, in addition to the corrugated shape, makes it possible to obtain a high moment of inertia, which makes it possible to support the loads acting upon it.

Furthermore, the manufacturing of the disc of the rim disclosed herein is particularly economic, as it does not involve the cutting of holes provided for by the prior art.

Finally, the wheel hub, axle and vehicle according to the invention can be subjected to changes and variants, which, though, do not go beyond the scope of protection set forth in the appended claims.

Obviously, as mentioned above, the axle 1 and the wheel hub 10 can have different shapes and consist of more and different pieces.

In addition, the toothed wheels and the gears described above could change and there could be elements that are not described herein, but are known when dealing with the assembly of a wheel hub, axle and vehicle according to the invention.

Furthermore, although a twin wheel solution is described, the wheel hub can be applied to any type of wheel, even a single one.

## Claims

1. Wheel hub (10) for axle (1) of a heavy vehicle, said wheel hub (10) comprising a fixed portion (8) configured to be carried rigidly by one end (3, 4) of said axle (1) and a mobile portion (9) configured to be carried in a rotationally free manner from said end (3, 4) of said axle (1) and with respect to said fixed portion (8), said fixed portion (8) and said mobile portion ( 9) delimiting with said end (3, 4) a space (14) isolated from the external environment, said wheel hub (10) including an electric machine (15) housed in said space (14) and including a stator (15') carried integral with said fixed portion (8) and a rotor (15'') operatively connected to said mobile portion (9), said wheel hub (10) including a transmission (16) housed in said space (14) radially inside with respect to said rotor (15'') and connecting said rotor (15'') to said mobile portion (19) so as to vary the speed/torque between said rotor (15'') and said mobile portion (9), said transmission (16) including a planetary/epicyclic gearing,
wherein said transmission (16) has a first epicyclic gearing (16') operatively connected to said rotor (15'') and a second epicyclic gearing (16") operatively connected to said mobile portion (9) and operationally connected in series to said first epicyclic gearing (16'),
and wherein said rotor (15") is connected to said transmission via a rotor holder (17) carried rotationally free with respect to said fixed portion (8) and/or said end (3, 4) of said axle (2).

2. Wheel hub according to claim 1, wherein said gearing is a compound/multi-stage epicyclic gearing.

3. Wheel hub according to one of the previous claims, in which said first and second epicyclic gearings (16', 16") each including a sun gear (18', 18"), a plurality of satellites (19', 19' '), pins (20', 20") and a crown (21', 21"), said first sun gear (18') of the first epicyclic gearing (16') is rigidly connected to the rotor holder (17) and meshes with the first plurality of satellites (19'), supported by respective first pins (20'), said first pins (20'), being rigidly connected to the second sun gear (18'') of the second epicyclic gearing (16"), called second planetary gear (18'') meshing with a respective plurality of second satellites (19") carried by respective second pins (20"), said second pins (20") being operationally connected to said mobile portion (9).

4. Wheel hub according to claim 3, in which said second pins (20") are connected to each other by a common train holder (23) rigidly connected to said mobile portion (9) .

5. Wheel hub according to claim 3 or 4, in which said first and second satellites (19', 19") have a different number of teeth and/or pitch diameter.

6. Wheel hub according to one of the previous claims, wherein said mobile portion (9) includes a main portion (9a) operationally connected by said transmission (16) to said rotor (15) and supported in a rotationally free manner by said end (3, 4) of said axle (2) and a connection portion (9c) configured to allow connection to a rim (30) of said vehicle.

7. Wheel hub according to one of the previous claims, comprising an air conditioning system (40) for said electric machine (15).

8. Wheel hub according to claim 7, wherein said conditioning system (40) is a fluid conditioning system and includes a plurality of ducts (41) adjacent to said fixed portion (8) in proximity to said stator (15 ') configured to allow the flow of an air conditioning fluid towards a heat exchanger system of said vehicle.

9. Wheel hub according to one of the previous claims, in which said fixed portion (8) defines an opening configured to allow the sealed connection of the stator (15') to an electrical energy source of said vehicle via electrical cables (53).

10. Wheel hub according to claims 8 and 9, comprising a head element (52) rigidly connected to said fixed portion (8) so as to be axially facing said end portion (3, 4) of said axle ( 2), said head element (52) defining with said fixed portion (8) and said end portion (3, 4) a chamber (51) isolated from the external environment and from said space (14), said chamber ( 51) housing said delivery (44) and return (45) pipes and said electrical cables (53).

11. Wheel hub according to one of the previous claims, comprising a lubrication system (60) for said transmission (16).

12. Wheel hub according to claim 11, wherein said lubrication system (60) is at least partially integrated into said end portions (3, 4).

13. Wheel hub according to claim 11 or 12 when dependent on claim 3, wherein said lubrication system (60) includes a nozzle (63) configured to supply lubricating fluid between said first planets (19') and said first crown (21').

14. Axle (1) extending along a longitudinal axis (A) and comprising a central portion (2) and a pair of end portions (3, 4) connected to the ends of said central portion (2) along said axis ( A) and respective wheel hubs (10) according to one of the previous claims, each carried by a respective end portion (3, 4).

15. Axle according to claim 14, wherein said central and end portions (2, 3, 4) are hollow and define a contiguous space (5) via end openings (6) along said axis (A) to called wheel hub (10).

16. Vehicle comprising an axle (1) according to one of claims 14 or 15.

17. Vehicle according to claim 16 comprising an electrical energy source electrically connected via electrical cables (53) to said stator (15') of said electric machine (15) of said wheel hub (10).

18. Vehicle according to claim 16 or 17, when dependent on claims 7 or 8, comprising a heat exchanger system fluidly connected to said conditioning system (40) of said wheel hub (10).
